# EUROPEAN PATENT SPECIFICATION

(11) **EP 2 610 975 B1**
(45) Date of publication and mention of the grant of the patent: **01.08.2018**
(21) Application number: 12007564.3
(22) Date of filing: 07.11.2012
(51) Int. Cl.: H01R 13/52, H01R 13/58

(54) **Unit comprising a wire fixing member and method of assembling it**
Einheit umfassend ein Drahtbefestigungselement und Verfahren zur Montage davon
Dispositif comprenant un élément de fixation de fils et son procédé d'assemblage

(30) Priority: 28.12.2011 JP 2011287569
(43) Date of publication of application: 03.07.2013
(73) Proprietor: Sumitomo Wiring Systems, Ltd., Yokkaichi-city, Mie 510-8503 (JP)
(72) Inventor: Sakakura, Kouji, MIE, 510-8503 (JP)
(74) Representative: Müller-Boré & Partner Patentanwälte PartG mbB

(56) References cited:
- EP-A2- 2 518 849
- WO-A1-2011/096590
- DE-U1- 29 617 655
- JP-A- 2002 134 953
- JP-A- 2010 225 371
- US-A1- 2008 280 467
- US-A1- 2011 300 741

## Description

The present invention relates to a unit comprising a wire fixing member to be fixed to a case in a state where a wire is inserted through a mounting hole of the case, and to a method of assembling it.

A wire fixing member of this type is known, for example, from Japanese Unexamined Patent Publication No. 2002-134953. This wire fixing member includes rubber plugs to be mounted in mounting holes of a case, a housing to which these rubber plugs are to be fixed and a retaining member to be mounted in this housing. Waterproof areas are formed in the case by the rubber plugs and the retaining member is crimped and connected to wires pulled out backward from the rubber plugs. Further, the wire fixing member includes a shield shell for covering the housing, and the housing is fixed by fixing this shield shell to the case. Specifically, the wires are fixed to the case by three members, i.e. the retaining member, the housing and the shield shell.

However, the retaining member cannot be made waterproof since it is arranged outside the waterproof areas in the above configuration. If an insulation coating of the wire is broken such as because the wire having the retaining member crimped and connected thereto is pulled, water enters the inside of the wire through the broken insulation coating.

US 2008/280467 A1 discloses a watertight connector having a plurality of terminal fittings to be connected with ends of wires and accommodated in a housing for at least partly accommodating the terminal fittings.

US 2011/300741 A1 discloses an electrical connector assembly including a connector housing having a plurality of sides that define an inner region of the connector housing and include opposite loading and mating sides.

An object of the present invention is preventing fluid such as water from entering the inside of a wire.

This object is solved according to the invention by the features of the independent claims. Particular embodiments of the invention are subject of the dependent claims.

According to one aspect of the invention, there is provided a unit as defined in claim 1.

According to such a configuration, since the retaining member is arranged in the waterproof area, even if an insulation coating of the wire is broken such as because the wire is strongly pulled, water does not enter the inside of the wire.

By mounting the second seal member and the retaining member into the housing, these can be integrally treated as one unit

The retaining member can be retained by mounting the front retainer to or into the mounting portion.

According to a particular embodiment, the retaining member is made of metal.

The following configurations are preferable as embodiments of the present invention.

The wire insertion hole may be composed of an inner space of the accommodating portion, an inner space of the mounting portion and the through hole.

A movement of the retaining member toward the accommodating portion may be prevented by the contact of the retaining member with a peripheral edge part of the through hole on the partition wall.

According to such a configuration, a movement of the retaining member toward the accommodating portion can be prevented by the partition wall.

At least one back retainer for retaining the second seal member from a side opposite to the partition wall across the second seal member may be mounted in or to the accommodating portion.

According to such a configuration, the second seal member can be retained by mounting the back retainer into or to the accommodating portion.

A shield shell which is made of a conductive material, particularly metal, and into which the housing is mounted may be further provided, and the housing may be held mounted in the mounting hole by fixing the shield shell to the case.

According to such a configuration, a shielding function can be ensured by the shield shell.

According to another aspect of the invention, there is provided a method as defined in claim 7.

Particularly, the wire insertion hole is composed of an inner space of the accommodating portion, an inner space of the mounting portion and the through hole.

Further particularly, a movement of the retaining member toward the accommodating portion is prevented by the contact of the retaining member with a peripheral edge part of the through hole on the partition wall.

Further particularly, at least one back retainer for retaining the second seal member from a side opposite to the partition wall across the second seal member is mounted in or to the accommodating portion.

Further particularly, the method further comprises mounting the housing into a shield shell which is made of conductive material, wherein the housing is held mounted in the mounting hole by fixing the shield shell to the case.

According to the above, it is possible to prevent water from entering the inside of a wire.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a wire fixing member in an embodiment when viewed from behind,
FIG. 2 is an exploded perspective view of the wire fixing member,
FIG. 3 is a section showing the internal structure of the wire fixing member,
FIG. 4 is an enlarged view of an essential part of FIG. 3,
FIG. 5 is a left side view of the wire fixing member,
FIG. 6 is a bottom view of the wire fixing member, and
FIG. 7 is a rear view of the wire fixing member.

### <Embodiment>

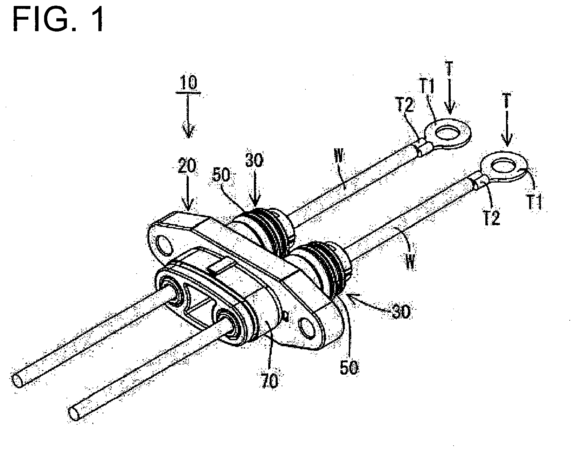

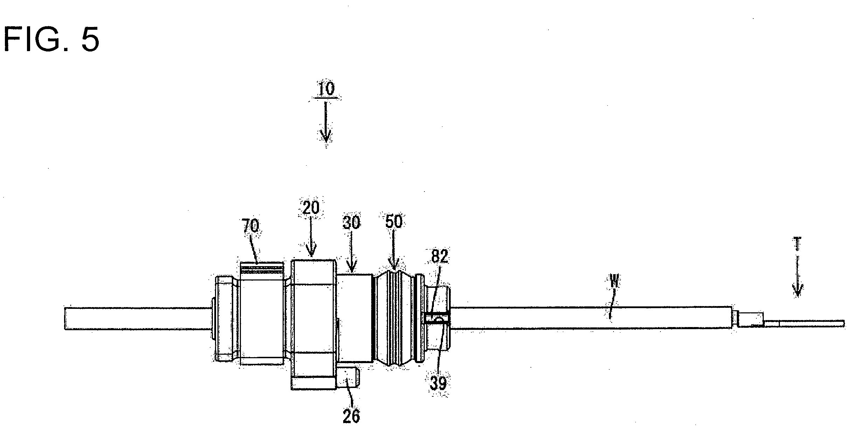

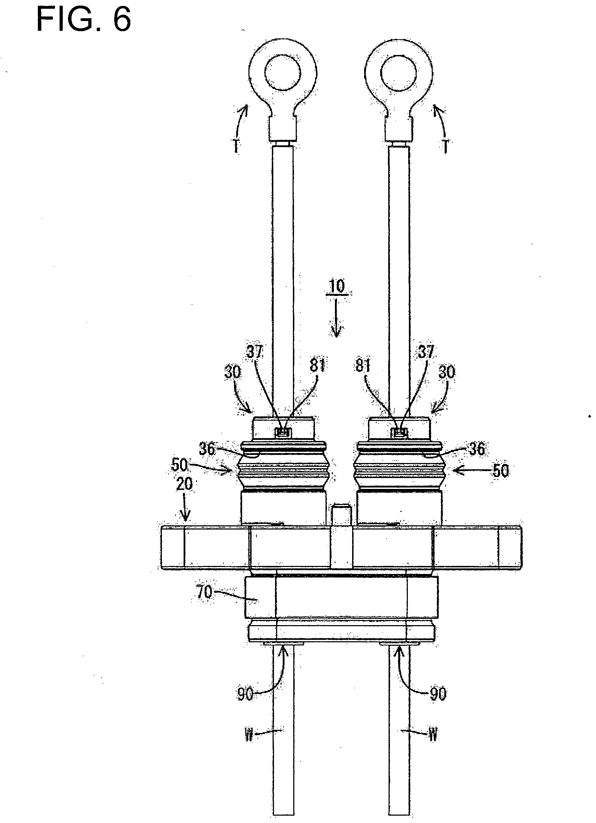

A particular embodiment of the present invention is described with reference to FIGS. 1 to 7. As shown in FIG. 1, a wire fixing member 10 in this embodiment is a member which, after holding one or more, particularly a plurality of wires W (e.g. a pair of wires W, W in this embodiment) penetrating therethrough, fixes the respective wire(s) W to a case (not shown) by being fixed to the case. A core is exposed at an end of the (particularly each) wire W by at least partly stripping an insulation coating, and a terminal fitting T is connected to this exposed core. This terminal fitting T particularly is a so-called round terminal and includes a round connecting portion T1 in the form of a flat plate perforated with a round hole and a wire connection portion T2 (particularly comprising a barrel portion T2) to be connected (particularly to be crimped and connected) to the core.

A part of the wire W having a sufficient length is arranged between the wire fixing member 10 and the terminal fitting T. Since this wire W is flexible, even if a position shift tolerance with respect to a terminal block (not shown) arranged in the case is large, the tolerance can be taken up. Thus, the terminal fitting T can be reliably connected to the terminal block.

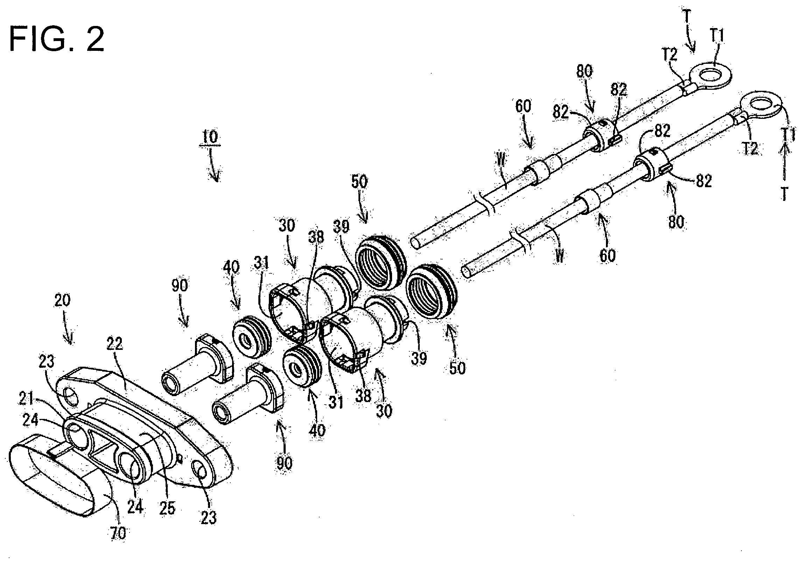

As shown in FIG. 2, the wire fixing member 10 includes a shield shell 20 made of a conductive material such as aluminum die-cast, housings 30 made e.g. of synthetic resin, one or more resilient or rubber plugs 40 (as particular a resilient plug) made of a resilient material such as silicone, one or more resilient or rubber rings 50 (as a particular resilient ring) made of a resilient material such as silicone, one or more wire crimp fittings 60 made e.g. of brass, at least one crimp band 70 made of metal, one or more front retainers 80 made e.g. of synthetic resin and/or one or more back retainers 90 made e.g. of synthetic resin and the like.

The shield shell 20 includes a laterally long shell main body 21, and a mounting flange 22 at least partly is circumferentially provided on the outer peripheral surface of this shell main body 21. The mounting flange 22 particularly is arranged on the front end side (side closer to the case) of the shell main body 21. One or more, particularly a pair of fixing holes 23, 23 are formed to penetrate in forward and backward directions adjacent to (particularly substantially on opposite widthwise sides of) the mounting flange 22. The shell main body 21 is formed with one or more, particularly a pair of mounting holes 24, 24 penetrating in forward and backward directions.

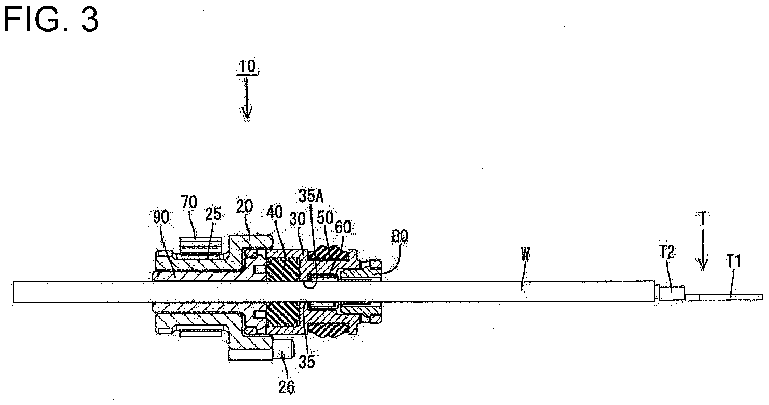

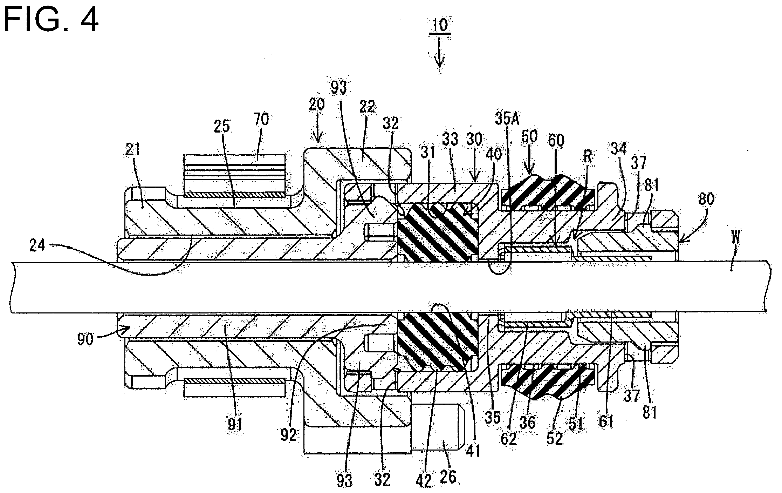

As shown in FIGS. 3 and 4, the mounting hole 24 is composed of or comprises a large-diameter hole arranged at the front side and a small-diameter hole behind and connected to the large-diameter hole. The back retainer 90 and/or a rear end part of the housing 30 for holding this back retainer 90 at least partly are to be mounted in the mounting hole 24. Specifically, the back retainer 90 includes a (particularly substantially cylindrical) portion 91 to be at least partly fitted into the small-diameter hole of the mounting hole 24 and a resilient or rubber plug pressing portion 92 to be at least partly fitted into the large-diameter hole of the mounting hole 24. The resilient or rubber plug 40 is retained by this resilient or rubber plug pressing portion 92.

The rubber plug pressing portion 92 particularly is at least partly fittable into a wire insertion hole 31 formed to penetrate through the housing 30 particularly substantially from behind. The rubber plug pressing portion 92 particularly includes one or more, particularly a pair of (upper and/or lower) locking pieces 93, 93 and the respective locking pieces 93, 93 are at least partly fitted into one or more, particularly a pair of (upper and/or lower) locking holes 32, 32 (particularly formed on a rear end part of the inner wall of the wire insertion hole 31) to be locked with respect to forward and backward directions. In this way, the rubber plug pressing portion 92 is fitted and held in the wire insertion hole 31. Note that the rear end of the cylindrical portion 91 particularly slightly projects backward from the rear end of the mounting hole 24 in a state where the back retainer 90 is mounted in the mounting hole 24. In this way, the damage of the wire W due to a contact with a rear end opening edge part of the mounting hole 24 is or can be avoided.

A crimp groove 25 to which the crimp band 70 is crimped, bent or folded and connected is formed particularly over the substantially entire circumference on the outer peripheral surface of the shell main body 21. By crimping and connecting the crimp band 70 after a shield element such as a tubular braided wire (not shown) at least partly is placed in this crimp groove 25, the shield element (e.g. the braided wire) and the shell main body 21 are electrically conductively secured. The shield element (e.g. the braided wire) is configured to collectively cover the plurality of wires W, so that conductive paths of the wires W can be collectively shielded. Note that particularly one or more pins 26 for positioning and preventing the rotation of the shield shell 20 by being fitted into one or more respective recesses provided in the case substantially project forward from a lower end part of the front surface of the shell main body 21.

Specifically, a plurality of housings 30 are provided in conformity with the number of the wires W, and the respective housings 30 particularly have a substantially cylindrical shape as a whole and can be individually at least partly mounted into the respective mounting holes 24 of the shield shell 20. This housing 30 includes an accommodating portion 33 which at least partly accommodates the resilient or rubber plug 40 inside, a mounting portion 34 into which the wire crimp fitting 60 and the front retainer 80 at least partly are to be mounted, and a partition wall 35 which at least partly partitions between the accommodating portion 33 and the mounting portion 34 and through which a through hole 35A allowing the passage of the wire W penetrates. Specifically, the wire insertion hole 31 is composed of or comprises an inner space of the accommodating portion 33, an inner space of the mounting portion 34 and/or the through hole 35A. In other words, the accommodating portion 33 and the mounting portion 34 communicate via the through hole 35A, particularly whereby the wire insertion hole 31 substantially extending in forward and backward directions is formed.

The rubber plug 40 (as a particular resilient plug) is to be mounted in the accommodating portion 33. The rubber plug 40 particularly includes an inner sealing surface 41 to be held in close contact with the outer peripheral surface of the wire W (particularly over the substantially entire circumference) and one or more, particularly a plurality of outer lips 42 to be held in close contact with the inner peripheral surface of the accommodating portion 33 particularly over the substantially entire circumference. Thus, when the rubber plug 40 at least partly is accommodated into the accommodating portion 33, the entrance of water or any other fluid into the interior of the housing 30 can be prevented by the inner sealing surface 41 and the outer lip(s) 42 of the rubber plug 40. Further, since the rubber plug 40 particularly is retained by the back retainer 90 substantially from behind, it is held in the accommodating portion 33. As a result, a waterproof or fluid-proof area R is formed in a space of the wire insertion hole 31 before the rubber plug 40.

The outer peripheral surface of the mounting portion 34 is recessed over at least part of the circumference, particularly over the substantially entire circumference, to form a mounting groove 36 into which the rubber ring 50 at least partly is mountable. The rubber ring 50 particularly substantially has a cylindrical shape and includes one or more, particularly a plurality of inner lips 51 to be held in close contact with (particularly the bottom surface of) the mounting groove 36 particularly over the substantially entire circumference and/or one or more, particularly a plurality of outer lips 52 to be held in close contact with (particularly the inner peripheral surface of) a mounting hole perforated in the case particularly substantially over the entire circumference. When the housing 30 at least partly is fitted into the mounting hole of the case, the interior of the case is sealed in a fluid- or liquid-tight manner by the rubber ring 50. Since the interior of the case communicates with the fluid- or waterproof area R, the fluid- or waterproof area R is held in a sealed state.

The inner space of the mounting portion 34 is composed of or comprises a small-diameter hole substantially facing the partition wall 35 and a large-diameter hole before and connected to the small-diameter hole. The front retainer 80 at least partly is to be mounted in the large-diameter hole of the mounting portion 34. One or more, particularly a pair of (upper and/or lower) holding holes 37, 37 are perforated in the inner peripheral surface of the large-diameter hole of the mounting portion 34 (front end part of the inner wall of the wire insertion hole 31). On the other hand, the front retainer 80 includes one or more, particularly a pair of holding projections 81, 81 which are to be fitted into the respective holding hole(s) 37, 37 to be locked with respect to forward and backward directions. Thus, when the front retainer 80 is mounted into the mounting portion 34 from front, the respective holding projection(s) 81, 81 is/are engaged with the respective holding hole(s) 37, 37, whereby the front retainer 80 is held or positioned in the large-diameter hole of the mounting portion 34.

Further, as shown in FIG. 2, one or more, particularly a pair of rotation preventing protrusions 82, 82 are formed on (particularly both left and right sides of) the front retainer 80. The respective rotation preventing protrusion(s) 82, 82 is/are at least partly fittable into one or more, particularly a pair of locking grooves 39, 39 formed on (particularly both left and right sides of) the front end opening edge of the mounting portion 34. By fitting the respective rotation preventing protrusion(s) 82, 82 into the respective locking groove(s) 39, 39, the front retainer 80 is positioned in a proper posture and/or held in the large-diameter hole of the mounting portion 34 particularly in a rotation prevented state.

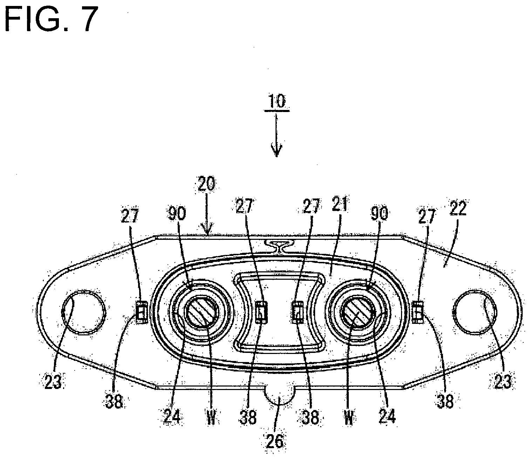

As shown in FIG. 2, one or more, particularly a pair of (left and/or right) locking projections 38, 38 are formed on (particularly a rear end part of) the housing 30. On the other hand, one or more, particularly a pair of engaging projections 27, 27 to be engaged with the respective locking projection(s) 38, 38 in forward and backward directions are formed in the (particularly each) mounting hole 24 of the shield shell 20 as shown in FIG. 7. The respective engaging projection(s) 27, 27 is/are arranged at the rear side of the shield shell 20. By the contact of the respective locking projection(s) 38, 38 with the respective engaging projection(s) 27, 27, the respective housing(s) 30 is/are held in the respective mounting hole(s) 24.

The wire crimp fitting 60 is to be fixed on the outer peripheral surface of the wire W. This wire crimp fitting 60 includes a (particularly substantially cylindrical) crimping portion 61 to be crimped, bent or folded and connected to the wire W and a (particularly substantially cylindrical) holding tube portion 62 behind and connected to the crimping portion 61. The holding tube portion 62 particularly is shaped to be one size larger than the crimping portion. Although the crimping portion 61 and the holding tube portion 62 are connected to each other, particularly only a part of the crimping portion 61 is connected to the holding tube portion 62 so as not to deform the holding tube portion 62 in crimping and connecting the crimping portion 61 to the wire W. The crimping portion 61 particularly is in the form of a so-called closed barrel and crimped and connected to the wire W particularly by hexagonal crimping. In a state where the crimping portion 61 is crimped and connected to the wire W, the crimping portion 61 and the holding tube portion 62 particularly are substantially coaxially arranged.

The crimping portion 61 crimped, bent or folded and connected to the wire W is sized to be able to be at least partly accommodated in the cylindrical front retainer 80 as shown in FIG. 4. On the other hand, the holding tube portion 62 is sized to be able to be at least partly accommodated in the small-diameter hole of the mounting portion 34. The holding tube portion 62 comes into contact with a peripheral edge portion of the through hole 35A of the partition wall 35 (particularly substantially from front) while coming into contact with (particularly a rear end part of) the front retainer 80 particularly substantially from behind. In other words, the holding tube portion 62 at least partly is held in the small-diameter hole of the mounting portion 34 particularly by being accommodated between (particularly the front wall of) the partition wall 35 and (particularly the rear end part of) the front retainer 80.

Since the small-diameter hole of the mounting portion 34 particularly is a part of the fluid- or waterproof area R, the crimping portion 61 crimped and connected to the wire W is arranged in the fluid- or waterproof area R. Similarly, since the large-diameter hole of the mounting portion 34 particularly is a part of the fluid- or waterproof area R, the holding tube portion 62 is arranged in the fluid- or waterproof area R. Accordingly, particularly the entire wire crimp fitting 60 is arranged in the fluid- or waterproof area R. According to such a configuration, even if the insulation coating is broken such as because the wire W is strongly pulled, fluid such as water does not enter the inside of the wire W through the broken insulation coating.

This embodiment is configured as described above and functions thereof are described next. First, as shown in FIG. 2, the wire(s) W is/are inserted through the front retainer(s) 80, the wire crimp fitting(s) 60, the rubber ring(s) 50, the housing(s) 30, the rubber plug(s) 40, the back retainer(s) 90, the shield shell 20 and/or the crimp band 70 particularly in this order beforehand as shown in FIG. 2. Thereafter, the insulation coating(s) particularly is/are stripped at the end(s) of the wire(s) W inserted beforehand to expose the core(s), and the terminal fitting(s) T are connected (particularly are crimped and connected) to these cores. Subsequently, the crimping portion(s) 61 of the wire crimp fitting(s) 60 is/are crimped and connected to the outer peripheral surface(s) of the wire(s) W.

Before or after this crimping operation, the rubber ring(s) 50 particularly is/are fitted into the mounting groove(s) 36 of the housing(s) 30 and/or the rubber plug(s) 40 is/are accommodated into the accommodating portion(s) 33 of the housing(s) 30. The back retainer(s) 90 is/are mounted into the accommodating portion(s) 33 of the housings 30 (particularly substantially from behind) and/or the front retainer(s) 80 is/are mounted into the mounting portion(s) 34 of the housing(s) 30 particularly substantially from front. In this way, the wire(s) W particularly is/are fixed to the housing(s) 30 and/or the wire crimp fitting(s) 60 particularly is/are arranged in the fluid- or waterproof area(s) R.

Subsequently, the respective housing(s) 30 is/are mounted into the respective mounting hole(s) 24 of the shield shell 20. By placing the shield element (particularly the braided wire, not shown) on the outer peripheral surface of the shell main body 21 of the shield shell 20 and crimping the crimp band 70, the shield element (particularly the braided wire) is connected and fixed to the shell main body 21. In this way, the wire fixing member 10 is completed. By fitting the mounting portion(s) 34 of the housing(s) 30 into the mounting hole(s) of the case, inserting one or more bolt(s) into the fixing hole(s) 23 of the mounting flange 22 and screwing it/them into screw hole(s) of the case, the shield shell 20 is or can be fixed to the case. In this way, the wire(s) W particularly is/are inserted into the mounting hole(s) of the case and fixed to the case particularly by both the wire fixing member 10 and the shield shell 20.

As described above, since the wire crimp fitting 60 crimped and connected to the wire W particularly is arranged in the fluid- or waterproof area R in this embodiment, even if the insulation coating is broken such as because the wire W is strongly pulled, fluid such as water does not enter the inside of the wire W through the broken insulation coating. Further, particularly by uniting the shield shell 20, the housing(s) 30, the rubber plug(s) 40, the rubber ring(s) 50, the wire crimp fitting(s) 60, the crimp band 70, the front retainer(s) 80 and/or the back retainer(s) 90, the wire fixing member 10 can be treated as one unit.
Accordingly, to prevent a fluid such as water from entering the inside of a wire, there is disclosed a wire fixing member 10 to be fixed to a case in a state where one or more wires W are to be at least partly inserted through one or more mounting holes of the case, and the wire fixing member 10 includes one or more housings 30 through which one or more wire insertion holes 31 allowing the insertion of the wire(s) penetrate, one or more resilient or rubber rings 50 which seal between the case and the housing(s) 30, one or more resilient or rubber plugs 40 which seal between the housing(s) 30 and the wire(s) W and one or more wire crimp fittings 60 (which particularly are made of metal) and held and retained in the housing(s) 30 in a state where the wire(s) W is/are fixed. A fluid- or waterproof area R which is made fluid- or waterproof particularly by the rubber ring 50 and the rubber plug 40 is formed on a side of or adjacent to the wire insertion hole 31 communicating with the interior of the case, and the wire crimp fitting 60 at least partly is arranged in the fluid- or waterproof area R.

### <Other Embodiments>

(1) Although the shield shell 20 is fixed to the case in the above embodiment, a metal collar may be press-fitted into the housing or may be used as an insert in insert-molding the housing, and the housing may be fixed to the case via this metal collar.

### Reference Numerals

- 10: wire fixing member
- 20: shield shell
- 30: housing
- 31: wire insertion hole
- 33: accommodating portion
- 34: mounting portion
- 35: partition wall
- 35A: through hole
- 40: rubber plug (second seal member)
- 50: rubber ring (first seal member)
- 60: wire crimp fitting (retaining member)
- 80: front retainer
- 90: back retainer
- R: waterproof area (fluidproof area)
- W: wire

## Claims

1. A unit comprising a wire fixing member (10) to be fixed to a case in a state where at least one wire (W) is inserted through at least one mounting hole of the case, wherein the wire fixing member (10) is configured to hold the wire (W) and comprises:
at least one housing (30) through which at least one wire insertion hole (31) allowing the insertion of the wire (W) penetrates, wherein a core is exposed at an end of the wire (W) by stripping an insulation coating, a terminal fitting (T) is connected to this exposed core, and a part of the wire (W) is arranged between the wire fixing member (10) and the terminal fitting (T);
at least one first seal member (50) which is provided to seal between the case and the housing (30);
at least one second seal member (40) which is provided to seal between the housing (30) and the wire (W); and
a retaining member (60) which is held and retained in the housing (30) in a state where the wire (W) is fixed;
wherein
the retaining member (60) is to be fixed on the outer peripheral surface of the wire (W),
the housing (30) includes an accommodating portion (33) which at least partly accommodates the second seal member (40) inside, a mounting portion (34) into which the retaining member (60) at least partly is mounted, and a partition wall (35) which at least partly partitions between the accommodating portion (33) and the mounting portion (34) and through which at least one through hole (35A) allowing the passage of the wire (W) penetrates,
at least one front retainer (80) for retaining the retaining member (60) from a side opposite to the partition wall (35) across the retaining member (60) is mounted into the mounting portion (34),
the retaining member (60) includes a crimping portion (61) to be crimped, bent or folded and connected to the wire (W) and a holding tube portion (62) behind and connected to the crimping portion (61),
the crimping portion (61) is sized to be able to be at least partly accommodated in the front retainer (80), and
the holding tube portion (62) is accommodated between the partition wall (35) and the front retainer (80),
**characterized in that**
a fluidproof area (R) which is made fluidproof by the first and second seal members (50, 40) is formed in a space of the wire insertion hole (31) before the second seal member (40) on a side of the wire insertion hole (31) communicating with the interior of the case,
the front retainer (80) at least partly is mounted in a hole of the mounting portion (34) which is a part of the fluid proof area (R), and
the retaining member (60) at least partly is arranged in the fluidproof area (R).

2. A unit according to claim 1, wherein the retaining member (60) is made of metal.

3. A unit according to claim 1, wherein the wire insertion hole (31) is composed of an inner space of the accommodating portion (33), an inner space of the mounting portion (34) and the through hole (35A).

4. A unit according to any one of claims 1 to 3, wherein a movement of the retaining member (60) toward the accommodating portion (33) is prevented by the contact of the retaining member (60) with a peripheral edge part of the through hole (35A) on the partition wall (35).

5. A unit according to any one of the preceding claims, wherein at least one back retainer (90) for retaining the second seal member (40) from a side opposite to the partition wall (35) across the second seal member (40) is mounted in or to the accommodating portion (33).

6. A unit according to any one of the preceding claims, further comprising a shield shell (20) which is made of conductive material and into which the housing (30) is mounted, wherein the housing (30) is held mounted in the mounting hole by fixing the shield shell (20) to the case.

7. A method of assembling a unit comprising a wire fixing member (10) to be fixed to a case in a state where at least one wire (W) is inserted through at least one mounting hole of the case, comprising the following steps:
inserting at least one wire (W) through at least one wire insertion hole (31) of at least one housing (30), wherein a core is exposed at an end of the wire (W) by stripping an insulation coating, a terminal fitting (T) is connected to this exposed core, and a part of the wire (W) is arranged between the wire fixing member (10) and the terminal fitting (T);
sealing between the case and the housing (30) by at least one first seal member (50) and between the housing (30) and the wire (W) by at least one second seal member (40); and
holding and retaining a retaining member (60) particularly made of metal in the housing (30) in a state where the wire (W) is fixed, wherein the retaining member (60) is to be fixed on the outer peripheral surface of the wire (W),
wherein the housing (30) includes an accommodating portion (33) which at least partly accommodates the second seal member (40) inside, a mounting portion (34) into which the retaining member (60) at least partly is mounted, and a partition wall (35) which at least partly partitions between the accommodating portion (33) and the mounting portion (34) and through which at least one through hole (35A) allowing the passage of the wire (W) penetrates,
wherein at least one front retainer (80) for retaining the retaining member (60) from a side opposite to the partition wall (35) across the retaining member (60) is mounted into the mounting portion (34),
wherein
the retaining member (60) includes a crimping portion (61) to be crimped, bent or folded and connected to the wire (W) and a holding tube portion (62) behind and connected to the crimping portion (61),
the crimping portion (61) is sized to be able to be at least partly accommodated in the front retainer (80), and
the holding tube portion (62) is accommodated between the partition wall (35) and the front retainer (80),
**characterized by**
forming a fluidproof area (R) which is made fluidproof by the first and second seal members (50, 40) in a space of the wire insertion hole (31) before the second seal member (40) on a side of the wire insertion hole (31) communicating with the interior of the case,
mounting the front retainer (80) at least partly in a hole of the mounting portion (34) which is a part of the fluid proof area (R), and
arranging the retaining member (60) at least partly in the fluidproof area (R).

8. A method according to claim 7, wherein the wire insertion hole (31) is composed of an inner space of the accommodating portion (33), an inner space of the mounting portion (34) and the through hole (35A).

9. A method according to claim 7 or 8, wherein a movement of the retaining member (60) toward the accommodating portion (33) is prevented by the contact of the retaining member (60) with a peripheral edge part of the through hole (35A) on the partition wall (35).

10. A method according to any one of the preceding claims 7 to 9, wherein at least one back retainer (90) for retaining the second seal member (40) from a side opposite to the partition wall (35) across the second seal member (40) is mounted in or to the accommodating portion (33).

11. A method according to any one of the preceding claims 7 to 10, further comprising mounting the housing (30) into a shield shell (20) which is made of conductive material, wherein the housing (30) is held mounted in the mounting hole by fixing the shield shell (20) to the case.

## Patentansprüche

1. Eine Einheit, die ein Drahtbefestigungselement (10) umfasst, das an einem Behälter in einem Zustand zu befestigen ist, in dem mindestens ein Draht (W) durch mindestens ein Montageloch des Behälters eingeführt ist, wobei das Drahtbefestigungselement (10) so konfiguriert ist, dass es den Draht (W) hält und Folgendes umfasst:
mindestens ein Gehäuse (30), durch das mindestens ein Drahteinführungsloch (31) eindringt, das das Einführen des Drahtes (W) ermöglicht, wobei ein Kern an einem Ende des Drahtes (W) durch Abziehen einer Isolationsbeschichtung freigelegt ist, wobei ein Anschlussstück (T) mit diesem freigelegten Kern verbunden ist und wobei ein Teil des Drahtes (W) zwischen dem Drahtbefestigungselement (10) und dem Anschlussstück (T) angeordnet ist;
mindestens ein erstes Dichtungselement (50), das zur Abdichtung zwischen dem Behälter und dem Gehäuse (30) vorgesehen ist;
mindestens ein zweites Dichtungselement (40), das zum Abdichten zwischen dem Gehäuse (30) und dem Draht (W) vorgesehen ist; und
ein Rückhalteelement (60), das im Gehäuse (30) in einem Zustand gehalten und zurückgehalten wird, in dem der Draht (W) befestigt ist;
wobei
das Rückhalteelement (60) an der Außenumfangsfläche des Drahtes (W) zu befestigen ist,
das Gehäuse (30) Folgendes beinhaltet: einen Aufnahmeabschnitt (33), der zumindest teilweise das zweite Dichtungselement (40) innen aufnimmt, einen Montageabschnitt (34), in dem das Rückhalteelement (60) zumindest teilweise montiert ist, und eine Trennwand (35), die zumindest teilweise zwischen dem Aufnahmeabschnitt (33) und dem Montageabschnitt (34) unterteilt und durch die zumindest ein Durchgangsloch (35A) hindurchgeht, das den Durchgang des Drahtes (W) ermöglicht,
mindestens eine vordere Rückhalteeinrichtung (80), für das Zurückhalten des Rückhalteelements (60) von einer der Trennwand (35) gegenüberliegenden Seite über das Rückhalteelement (60) hinweg, in den Montageabschnitt (34) montiert ist,
das Rückhalteelement (60) einen Crimpabschnitt (61) beinhaltet, um an den und mit dem Draht (W) gecrimpt, gebogen oder gefaltet und verbunden zu werden, und ein Halte-Rohrabschnitt (62), der sich dahinter befindet und mit dem Crimpabschnitt (61) verbunden ist,
der Crimpabschnitt (61) so bemessen ist, dass er zumindest teilweise in der vorderen Rückhalteeinrichtung (80) untergebracht werden kann, und wobei
der Halte-Rohrabschnitt (62) zwischen der Trennwand (35) und der vorderen Rückhalteeinrichtung (80) aufgenommen ist,
**dadurch gekennzeichnet, dass**
ein fluiddichter Bereich (R), der durch das erste und zweite Dichtungselement (50, 40) fluiddicht gemacht wird, in einem Raum des Drahteinführungslochs (31) vor dem zweiten Dichtungselement (40) auf einer Seite des Drahteinführungslochs (31) gebildet wird, die mit dem Inneren des Behälters kommuniziert, dass
die vordere Rückhalteeinrichtung (80) zumindest teilweise in einem Loch des Montageabschnitts (34) montiert ist, der ein Teil des fluiddichten Bereichs (R) ist, und dass
das Rückhalteelement (60) zumindest teilweise im fluiddichten Bereich (R) angeordnet ist.

2. Eine Einheit nach Anspruch 1, wobei das Rückhalteelement (60) aus Metall hergestellt ist.

3. Eine Einheit nach Anspruch 1, wobei das Drahteinführungsloch (31) aus einem Innenraum des Aufnahmeabschnitts (33), einem Innenraum des Montageabschnitts (34) und dem Durchgangsloch (35A) besteht.

4. Eine Einheit nach irgendeinem der Ansprüche von 1 bis 3, wobei eine Bewegung des Rückhalteelements (60) in Richtung des Aufnahmeabschnitts (33) durch den Kontakt des Rückhalteelements (60) mit einem Umfangsrandteil des Durchgangslochs (35A) an der Trennwand (35) verhindert wird.

5. Eine Einheit nach irgendeinem der vorhergehenden Ansprüche, wobei mindestens eine hintere Rückhalteeinrichtung (90), für das Zurückhalten des zweiten Dichtungselements (40) von einer der Trennwand (35) gegenüberliegenden Seite über das zweite Dichtungselement (40) hinweg, im oder am Aufnahmeabschnitt (33) angebracht ist.

6. Eine Einheit nach irgendeinem der vorstehenden Ansprüche, ferner umfassend einen Abschirmmantel (20), der aus leitfähigem Material besteht und in den das Gehäuse (30) montiert ist, wobei das Gehäuse (30) durch Fixieren des Abschirmmantels (20) am Behälter montiert in der Montageöffnung gehalten wird.

7. Ein Verfahren zum Zusammenbau einer Einheit, die ein Drahtbefestigungselement (10) umfasst, das an einem Behälter in einem Zustand zu befestigen ist, in dem mindestens ein Draht (W) durch mindestens ein Montageloch des Behälters eingeführt ist, das folgende Schritte umfasst:
Einführen mindestens eines Drahtes (W) durch mindestens ein Drahteinführungsloch (31) mindestens eines Gehäuses (30), wobei ein Kern an einem Ende des Drahtes (W) durch abziehen einer Isolationsbeschichtung freigelegt ist, wobei ein Anschlussstück (T) mit diesem freigelegten Kern verbunden ist und wobei ein Teil des Drahtes (W) zwischen dem Drahtbefestigungselement (10) und dem Anschlussstück (T) angeordnet ist;
Abdichten zwischen dem Behälter und dem Gehäuse (30) durch mindestens ein erstes Dichtungselement (50) und zwischen dem Gehäuse (30) und dem Draht (W) durch mindestens ein zweites Dichtungselement (40); und
Halten und Zurückhalten im Gehäuse (30) eines insbesondere aus Metall bestehenden Rückhalteelements (60), in einem Zustand, in dem der Draht (W) fixiert ist, wobei das Rückhalteelement (60) an der äußeren Umfangsfläche des Drahtes (W) zu fixieren ist,
wobei das Gehäuse (30) Folgendes beinhaltet: einen Aufnahmeabschnitt (33), der zumindest teilweise das zweite Dichtungselement (40) innen aufnimmt, einen Montageabschnitt (34), in dem das Rückhalteelement (60) zumindest teilweise montiert ist, und eine Trennwand (35), die zumindest teilweise zwischen dem Aufnahmeabschnitt (33) und dem Montageabschnitt (34) unterteilt und durch die zumindest ein Durchgangsloch (35A) hindurchgeht, das den Durchgang des Drahtes (W) ermöglicht,
wobei mindestens eine vordere Rückhalteeinrichtung (80), für das Zurückhalten des Rückhalteelements (60) von einer der Trennwand (35) gegenüberliegenden Seite über das Rückhalteelement (60) hinweg, in den Montageabschnitt (34) montiert ist,
wobei
das Rückhalteelement (60) einen Crimpabschnitt (61) beinhaltet, um an den und mit dem Draht (W) gecrimpt, gebogen oder gefaltet und verbunden zu werden, und ein Halte-Rohrabschnitt (62), der sich dahinter befindet und mit dem Crimpabschnitt (61) verbunden ist,
der Crimpabschnitt (61) so bemessen ist, dass er zumindest teilweise in der vorderen Rückhalteeinrichtung (80) untergebracht werden kann, und wobei
der Halte-Rohrabschnitt (62) zwischen der Trennwand (35) und der vorderen Rückhalteeinrichtung (80) aufgenommen ist,
**gekennzeichnet durch**
das Bilden eines fluiddichten Bereichs (R), der durch das erste und zweite Dichtungselement (50, 40) fluiddicht gemacht wird, in einem Raum des Drahteinführungslochs (31) vor dem zweiten Dichtungselement (40) auf einer Seite des Drahteinführungslochs (31) gebildet wird, die mit dem Inneren des Behälters kommuniziert,
das Montieren der vorderen Rückhalteeinrichtung (80) zumindest teilweise in einem Loch des Montageabschnitts (34), der ein Teil des fluiddichten Bereichs (R) ist, und
das Anordnen des Rückhalteelements (60) zumindest teilweise im fluiddichten Bereich (R).

8. Ein Verfahren nach Anspruch 7, wobei das Drahteinführungsloch (31) aus einem Innenraum des Aufnahmeabschnitts (33), einem Innenraum des Montageabschnitts (34) und dem Durchgangsloch (35A) besteht.

9. Ein Verfahren nach Anspruch 7 oder 8, wobei eine Bewegung des Rückhalteelements (60) in Richtung des Aufnahmeabschnitts (33) durch den Kontakt des Rückhalteelements (60) mit einem Umfangsrandteil des Durchgangslochs (35A) an der Trennwand (35) verhindert wird.

10. Ein Verfahren nach einem der vorstehenden Ansprüche 7 bis 9, wobei mindestens eine hintere Rückhalteeinrichtung (90), für das Zurückhalten des zweiten Dichtungselements (40) von einer der Trennwand (35) gegenüberliegenden Seite über das zweite Dichtungselement (40) hinweg, im oder am Aufnahmeabschnitt (33) angebracht ist.

11. Ein Verfahren nach irgendeinem der vorstehenden Ansprüche 7 bis 10, ferner umfassend das Montieren des Gehäuses (30) in einen Abschirmmantel (20), der aus leitfähigem Material besteht, wobei das Gehäuse (30) durch Fixieren des Abschirmmantels (20) am Behälter montiert in der Montageöffnung gehalten wird.

## Revendications

1. Une unité comprenant un élément de fixation de fil (10) à fixer à un châssis dans un état où au moins un fil (W) est inséré à travers au moins un trou de montage du châssis, sachant que l'élément de fixation de fil (10) est configuré pour maintenir le fil (W) et comprend :
au moins un boîtier (30) à travers lequel pénètre au moins un trou d'insertion de fil (31) permettant l'insertion du fil (W), sachant que un noyau est exposé à une extrémité du fil (W) par élimination d'un revêtement isolant, un raccord de borne (T) est connecté à ce noyau exposé, et qu'une partie du fil (W) est disposée entre l'élément de fixation de fil (10) et le raccord de borne (T) ;
au moins un premier élément d'étanchéité (50) qui est fourni pour assurer l'étanchéité entre le châssis et le boîtier (30) ;
au moins un deuxième élément d'étanchéité (40) qui est fourni pour assurer l'étanchéité entre le boîtier (30) et le fil (W) ; et
un élément de retenue (60) qui est maintenu et retenu dans le boîtier (30) dans un état où le fil (W) est fixé ;
sachant que
l'élément de retenue (60) doit être fixé sur la surface périphérique extérieure du fil (W),
le boîtier (30) inclut une portion de logement (33) qui loge au moins partiellement le deuxième élément d'étanchéité (40) à l'intérieur, une portion de montage (34) dans laquelle l'élément de retenue (60) est monté au moins partiellement, et une paroi de séparation (35) qui sépare au moins partiellement la portion de logement (33) et la portion de montage (34) et à travers laquelle pénètre au moins un trou traversant (35A) permettant le passage du fil (W),
au moins un dispositif de retenue avant (80) pour retenir l'élément de retenue (60) d'un côté opposé à la paroi de séparation (35) à travers l'élément de retenue (60) est monté dans la portion de montage (34),
l'élément de retenue (60) comprend une portion de sertissage (61), devant être sertie, courbée ou repliée et connecté au fil (W), et une portion de tube de maintien (62) derrière et connectée à la portion de sertissage (61),
la portion de sertissage (61) est dimensionnée pour pouvoir être logée au moins partiellement dans le dispositif de retenue avant (80), et
la portion de tube de maintien (62) est logée entre la paroi de séparation (35) et le dispositif de retenue avant (80),
**caractérisée en ce que**
une zone imperméable aux fluides (R), qui est rendue imperméable aux fluides par les éléments de d'étanchéité premier et deuxième (50, 40), est formée dans un espace du trou d'insertion de fil (31) avant le deuxième élément de d'étanchéité (40) sur un côté du trou d'insertion de fil (31) communiquant avec l'intérieur du châssis,
le dispositif de retenue avant (80) est monté au moins partiellement dans un trou de la partie de montage (34) qui fait partie de la zone étanche aux fluides (R), et que
l'élément de retenue (60) est agencé au moins partiellement dans la zone étanche aux fluides (R).

2. Une unité d'après la revendication 1, sachant que l'élément de retenue (60) est réalisé en métal.

3. Une unité d'après la revendication 1, sachant que le trou d'insertion de fil (31) est composé d'un espace intérieur de la portion de logement (33), d'un espace intérieur de la portion de montage (34) et du trou traversant (35A).

4. Une unité d'après une quelconque des revendications de 1 à 3, sachant qu'un mouvement de l'élément de retenue (60) vers la portion de logement (33) est empêché par le contact de l'élément de retenue (60) avec une partie de bord périphérique du trou traversant (35A) sur la paroi de séparation (35).

5. Une unité d'après une quelconque des revendications précédentes, sachant qu'au moins un dispositif de retenue arrière (90) pour retenir le deuxième élément d'étanchéité (40) à partir d'un côté opposé à la paroi de séparation (35) à travers le deuxième élément d'étanchéité (40) est monté dans ou sur la portion de logement (33).

6. Une unité d'après une quelconque des revendications précédentes, comprenant en outre une coque de blindage (20) qui est faite d'un matériau conducteur et dans laquelle le boîtier (30) est monté, sachant que le boîtier (30) est maintenu monté dans le trou de montage en fixant la coque de blindage (20) au châssis.

7. Un procédé d'assemblage d'une unité comprenant un élément de fixation de fil (10) à fixer à un châssis dans un état où au moins un fil (W) est inséré à travers au moins un trou de montage du châssis, comprenant les étapes suivantes :
insérer au moins un fil (W) à travers au moins un trou d'insertion de fil (31) d'au moins un boîtier (30), sachant qu'un noyau est exposé à une extrémité du fil (W) en éliminant un revêtement isolant, qu'un raccord de borne (T) est connecté à ce noyau exposé, et qu'une partie du fil (W) est agencée entre l'élément de fixation de fil (10) et le raccord de borne (T) ;
étanchéifier entre le châssis et le boîtier (30) par au moins un premier élément d'étanchéité (50) et entre le boîtier (30) et le fil (W) par au moins un deuxième élément d'étanchéité (40) ; et
maintenir et retenir un élément de retenue (60), réalisé notamment en métal, dans le boîtier (30) dans un état où le fil (W) est fixé, sachant que l'élément de retenue (60) doit être fixé sur la surface périphérique extérieure du fil (W),
sachant que le boîtier (30) inclut une portion de logement (33) qui loge au moins partiellement le deuxième élément d'étanchéité (40) à l'intérieur, une portion de montage (34) dans laquelle l'élément de retenue (60) est monté au moins partiellement, et une paroi de séparation (35) qui sépare au moins partiellement la portion de logement (33) et la portion de montage (34) et à travers laquelle pénètre au moins un trou traversant (35A) permettant le passage du fil (W),
sachant qu'au moins un dispositif de retenue avant (80) pour retenir l'élément de retenue (60) à partir d'un côté opposé à la paroi de séparation (35) à travers l'élément de retenue (60) est monté dans la portion de montage (34),
sachant que
l'élément de retenue (60) comprend une portion de sertissage (61) devant être sertie, courbée ou repliée et connectée au fil (W) et une partie de tube de maintien (62) derrière et connectée à la portion de sertissage (61),
la portion de sertissage (61) est dimensionnée de manière à pouvoir être au moins partiellement accommodée dans le dispositif de retenue avant (80), et que
la portion de tube de maintien (62) est logée entre la paroi de séparation (35) et le dispositif de support avant (80),
**caractérisé par** le fait de
former une zone étanche aux fluides (R) qui est rendue étanche aux fluides par les éléments de d'étanchéité premier et deuxième (50, 40) dans un espace du trou d'insertion de fil (31) avant le deuxième élément de d'étanchéité (40) sur un côté du trou d'insertion de fil (31) communiquant avec l'intérieur du châssis,
monter le dispositif de retenue avant (80) au moins partiellement dans un trou de la portion de montage (34) qui fait partie de la zone étanche aux fluides (R), et de
agencer l'élément de retenue (60) au moins partiellement dans la zone étanche aux fluides (R).

8. Un procédé d'après la revendication 7, sachant que le trou d'insertion de fil (31) est composé d'un espace intérieur de la portion de logement (33), d'un espace intérieur de la portion de montage (34) et du trou traversant (35A).

9. Un procédé d'après la revendication 7 ou 8, sachant qu'un mouvement de l'élément de retenue (60) vers la portion de logement (33) est empêché par le contact de l'élément de retenue (60) avec une partie de bord périphérique du trou traversant (35A) sur la paroi de séparation (35).

10. Un procédé d'après l'une quelconque des revendications 7 à 9 précédentes, sachant qu'au moins un dispositif de retenue arrière (90) pour retenir le deuxième élément d'étanchéité (40) à partir d'un côté opposé à la paroi de séparation (35) à travers le deuxième élément d'étanchéité (40) est monté dans ou sur la portion de logement (33).

11. Un procédé d'après l'une quelconque des revendications 7 à 10 précédentes, comprenant en outre une coque de blindage (20) qui est faite d'un matériau conducteur et dans laquelle le boîtier (30) est monté, sachant que le boîtier (30) est maintenu monté dans le trou de montage en fixant la coque de blindage (20) au châssis.
